# EUROPEAN PATENT APPLICATION

(11) **EP 2 876 325 A2**
(43) Date of publication of application: **27.05.2015**
(21) Application number: 14175765.8
(22) Date of filing: 04.07.2014
(51) Int. Cl.: F16D 55/38, F16D 66/00, F16D 59/02, F16D 65/18, F16D 121/22

(54) **Flameproof emergency electromagnetic brake**

(30) Priority: 05.07.2013 IT MI20131134
(71) Applicant: Paone, Andrea, 27010 Siziano (PV) (IT); Paone, Guido, 27010 Siziano (PV) (IT)
(72) Inventor: Paone, Andrea, 27010 Siziano (PV) (IT); Paone, Guido, 27010 Siziano (PV) (IT)
(74) Representative: Baroni, Matteo

(57) **Abstract**

A flameproof electromagnetic emergency brake is described, which is fixed downstream of a kinematic mechanism of an apparatus to be controlled, and which comprises:
- a magnet (3) with a coil (4) run through by electric current to generate the electromagnetic effect;
- a movable keeper (8) adapted to be attracted or pushed back by the magnet;
- a fixed keeper (10);
- a series of floating disks (11) alternated with a series of friction lining disks (12), disposed between said movable and fixed keepers and coaxial thereto, the absence of electromagnetic effect being such as to cause a braking effect due to the thrust of the movable keeper towards the fixed keeper, the presence of electromagnetic effect being such as to attract the movable keeper towards the magnet;
- a rotating shaft (5) arranged axially in the brake, and axially inserted into said magnet, movable keeper, fixed keeper, floating disks and friction lining disks, and adapted to house a shaft of the apparatus downstream of the kinematic mechanism;
- a measuring device (15) for measuring the angular speed of the rotating shaft (5), suitable for providing a signal of intervention of the braking effect in the event that the angular speed exceeds a threshold;
- a fixing element (2) for fixing the brake to said kinematic mechanism;
- a containment box (1) adapted to enclose said brake, said containment box ending on one side with said fixing element (2) and on the other side with said magnet (3), and being crossed by said rotating shaft (5).

## Description

### Field of the invention

The present invention relates to a flameproof electromagnetic emergency brake.

### Background art

Emergency brakes have a large number of applications related to the safe operation of apparatuses normally equipped with rotating shafts, the operation of which must be protected against potential situations of undesired rotation or excessive speed, e.g. due to drive motor disconnection or failure.

One application example concerns the so-called overhead travelling cranes, i.e. apparatuses for hoisting and moving heavy loads, e.g. containers. These apparatuses are normally equipped with a rotary drum shaft, driven by a motor and an associated kinematic mechanism, possibly through speed reducers/adapters. On the shaft, a rope made of traction-resistant material, e.g. twisted steel wires or plastic ropes, is wound/unwound. To a hook normally connected to the rope, a load is hung which is then raised/lowered by winding/unwinding the rope on the shaft.

In the event of a failure, a dangerous situation may arise wherein the rotation mechanism is released from its connection to the motor, so that the shaft can turn and rapidly unwind the rope at a high revolution speed, thus causing the load to fall.

Mechanical safety systems are known, which are adapted to prevent such dangerous situations from arising by stopping any undue rotation of the shaft.

For example, a mechanical safety system is known which is inserted into the kinematic mechanism that connects the shaft to the motor: in the event of a failure, the increased revolution speed of the shaft will cause pawls to intervene by getting into the system, thus blocking it.

Such a safety system is however characterized by evident drawbacks.

First of all, the shaft must reach a minimum revolution speed in order to cause the pawls to open and intervene. For example, assuming that the normal angular speed of the shaft is 20 rpm, they will intervene at a speed of approx. 300 rpm: therefore, the rope will start unwinding and the load will go down a certain number of metres before stopping. Moreover, it is not possible to determine the reliability of the safety system over time, in that in normal conditions it will not intervent, thus remaining still and idle for a very long time, so that when a failure occurs requiring it to intervene, it might not operate correctly, e.g. because it has seized. Furthermore, it cannot be subjected to maintenance, and no operation tests can be carried out because they would be destructive.

If the system intervenes, the load will be stopped at a certain height above the ground, and lowering the load will be very difficult because the shaft will have been blocked. A long time will pass before the load can be recovered, so that there is also a risk of load deterioration. For example, when the system is used in a foundry for transporting tons of melted cast iron, if too much time is allowed to pass the iron will solidify, with the risk of having to throw everything away (both container and content), resulting in considerable economic damage.

In addition, a rapid blocking will cause stress on the rope, with the risk that it might break and cause a disaster due to the load falling down; also, the overhead travelling crane might even jolt and turn over.

Furthermore, the need to ensure the flameproof characteristic makes the brake difficult to manufacture. It must be equipped with an enclosure having binding and stringent mechanical characteristics as regards the couplings between its components, and has to be approved by certification bodies for verifying the flameproof characteristics.

The use in a potentially explosive environment implies that the brake must be manufactured in such a way as to prevent the risk of an explosion, which might be caused by sparks or electric discharges generated, for example, when operating electric switches. Another feature that said brake must have is adaptability to different existing apparatuses, also when installed at a later time for performance integration and improvement, e.g. for fixing it downstrem of an apparatus to be controlled.

Patent application DE10314697-A1 describes an electric motor that integrates a braking device, wherein the assembly has flameproof characteristics. The braking device described therein has, however, various limitations, including not being suitable for application downstream of an existing apparatus, since the various components are integrated with the motor and are directly installed on the shaft of the motor itself, being simply protected by external boots that cannot ensure effective flameproof protection.

### Summary of the invention

It is therefore one object of the present invention to provide flameproof electromagnetic emergency brake which can solve the above-described problems as well as other problems that will be described below.

The invention aims at providing a flameproof electromagnetic emergency brake which is efficient, safe, economical, and always operational.

It is one object of the present invention to provide a flameproof electromagnetic emergency brake as set out in claim 1, which is to be fixed downstream of a kinematic mechanism of an apparatus to be controlled, and which comprises:
- a magnet with a coil run through by current to generate the electromagnetic effect;
- a movable keeper adapted to be attracted or pushed back by the magnet;
- a fixed keeper;
- a series of floating disks alternated with a series of friction lining disks, disposed between said movable and fixed keepers and coaxial thereto, the absence of electromagnetic effect being such as to cause a braking effect due to the thrust of the movable keeper towards the fixed keeper, the presence of electromagnetic effect being such as to attract the movable keeper towards the magnet;
- a rotating shaft arranged axially in the brake, and axially inserted into said magnet, movable keeper, fixed keeper, floating disks and friction lining disks, and adapted to house a shaft of the apparatus downstream of the kinematic mechanism;
- a measuring device for measuring the angular speed of the rotating shaft, suitable for providing a signal of intervention of the braking effect in the event that the angular speed exceeds a threshold;
- a fixing element for fixing the brake to said kinematic mechanism;
- a containment box adapted to enclose said brake, said containment box ending on one side with said fixing element and on the other side with said magnet, and being crossed by said rotating shaft.

In particular, the present invention relates to a flameproof electromagnetic emergency brake as set out in detail in the claims, which are an integral part of the present description.

### Brief description of the drawings.

Further objects and advantages of the present invention will become apparent from the following detailed description of an example of embodiment thereof and from the annexed drawings, which are only supplied by way of non-limiting example, wherein:

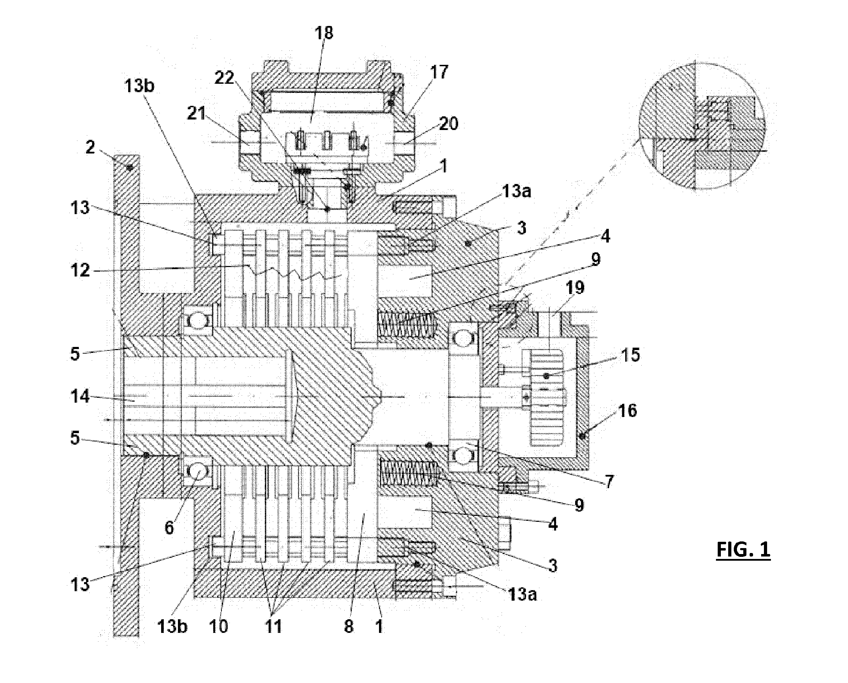

Figure 1 is a sectional side view of the flameproof electromagnetic emergency brake of the present invention;
Figure 2 shows a sectional side view of the flameproof electromagnetic emergency brake of the present invention and the corresponding front views showing the side on which it is connected to an apparatus to be braked and the external side.

In the drawings, the same reference numerals and letters identify the same items or components.

### Detailed description

With reference to the drawings, the following will describe the elements that constitute the flameproof electromagnetic emergency brake according to the invention.

The brake is enclosed in a containment box 1, e.g. cylindrical in shape, ending on one side with a flange-type fixing element 2, and being open on the other side: in the opening, a magnet 3 is connected, e.g. by means of screws. The magnet has a circular-crown cavity facing towards the inside of the box, in which there is a coil 4 (e.g. a toroidal coil) that is supplied with current and allows the magnet to generate a magnetic field. The flange 2 is used for fastening the brake to a corresponding flange of the apparatus to be controlled. The box 1 and the magnet 3 have a central through hole, into which a shaft 5 is inserted. The shaft 5 rotates on bearings 6, 7, preferably fitted in cavities at both ends of the brake, one towards the flange 2 and the other within the magnet.

Within the cavity of the box there are various elements of the braking system.

A first movable keeper 8, facing towards the inner side of the magnet, is adapted to be attracted or pushed back by the magnetic effect: in the presence of current in the coil 4 the movable keeper 8 is attracted against the magnet, whereas in the absence of current in the coil the movable keeper is pushed back by springs 9 which are present in respective cavities in the inner face of the magnet.

A second fixed keeper 10 faces towards the inner side of the box, opposite to the magnet side.

Between the two keepers there are alternated series of floating disks 11 and friction lining disks 12, which disks, when compressed between the two keepers 8 and 10, cause the shaft 5 to be braked.

A series of studs 13 run longitudinally through the inside of the box and are fixed at the two sides by inserting its two ends on one side into holes 13a in the magnet and on the other side into holes 13b in the box, on the flange side; This prevents the studs from being subject to torsion when braking.

The two keepers 8 and 10 and the floating disks 11 have holes which are passed through by the studs 13, which prevent their rotation and allow their axial translation. Instead, the friction lining disks 12 have a smaller diameter than the transversal position of the studs, while they can rotate integrally with the shaft 5. The latter has, at its part that stays inside the box, where the disks are located, such a cross-section (e.g. square) that prevents the friction lining disks from rotating while allowing them to translate axially along the shaft itself. Said friction lining disks are equipped with a central hole having the same shape as the shaft.

On the flange side, the shaft 5 has a central hole 14 into which a shaft (not shown in the drawing) of the apparatus to be controlled (e.g. an overhead travelling crane) is inserted and secured. On the other side, the shaft 5 ends with an rpm measuring device, preferably an encoder 15 enclosed in its own container 16.

The box 1 has on its side a terminal block 17 containing a terminal board 18 for the terminals of the electric cables and an electronic circuit for controlling the operation of the brake.

The power supply cables (not shown) arrive at the terminal board through another opening 21 of the terminal block.

Within the box 1 there is a cable passage 22 from the terminal board 18 to the coil 4 of the magnet.

The emergency brake is placed at a point downstream of the entire kinematic mechanism of the apparatus to be controlled, i.e. at the end of the shaft of the apparatus, and can therefore intervene should a failure occur in any one of the elements of the kinematic mechanism.

When the apparatus is in the correct operating conditions, in which current is applied to the coil 4, the emergency brake has the movable keeper 8 attracted against the magnet 3, i.e. in the unbraked condition. An interruption of the current in the coil will cause the movable keeper to detach from the magnet, resulting in the braking effect.

The encoder 15 is electrically connected to the terminal board 18 through an electric cable (not shown in the drawing) between an opening 19 of the container 16 and an opening 20 of the terminal block 17, and sends its readings to the electronic control circuit inserted in the terminal block 17.

The encoder can detect very quickly any variations in the angular speed of the shaft. In undesired dangerous conditions due to failures or malfunctions of the kinematic mechanism of the controlled apparatus, there may be a sudden increase of the angular speed of the shaft of the apparatus, and hence of the shaft 5 of the brake. The encoder detects the speed increase and issues a command to the electronic circuit contained in the terminal block 17 for interrupting the current in the coil 4: the spring 9 will then push the movable keeper 8 against the disks 11, 12 and the other keeper 10, resulting in the braking action.

The electronic circuit is also equipped with circuit elements adapted to detect any malfunction of the encoder or other electric faults, thus contributing to increasing the safety level of the invention as a whole.

The emergency brake develops a very high braking torque. Furthermore, the specially developed friction material of the disks increases its own friction coefficient as temperature increases due to the work generated by friction against the braking tracks. Because of this, a progressive and damped braking action is generated, with no dangerous jerks due to a sudden stop.

In one possible embodiment, the encoder 15 can take eight readings every full turn of the shaft. In a normal operating condition, the shaft 5 rotates, for example, at a maximum angular speed of 20 rpm, and therefore the encoder will take a reading every 20 hundredths of a second or more. As long as the time distance between two consecutive readings remains above 20 hundredths of a second, this condition will be considered to be normal and the brake will not intervene. When this time distance falls below that value, instead, it means that there has been an undesired increase of the angular speed of the shaft, and therefore the electronic circuit in the terminal board will intervene within max. 20 hundredths of a second to stop the current flow to the coil 4, resulting in the braking effect. Therefore, the brake intervenes in less than half a turn of the shaft.

The emergency brake is always operational and is activated by the application of current to the controlled apparatus; therefore, its emergency functionality is automatically verified, and it is always in operation, braking every time current is removed, even in normal conditions.

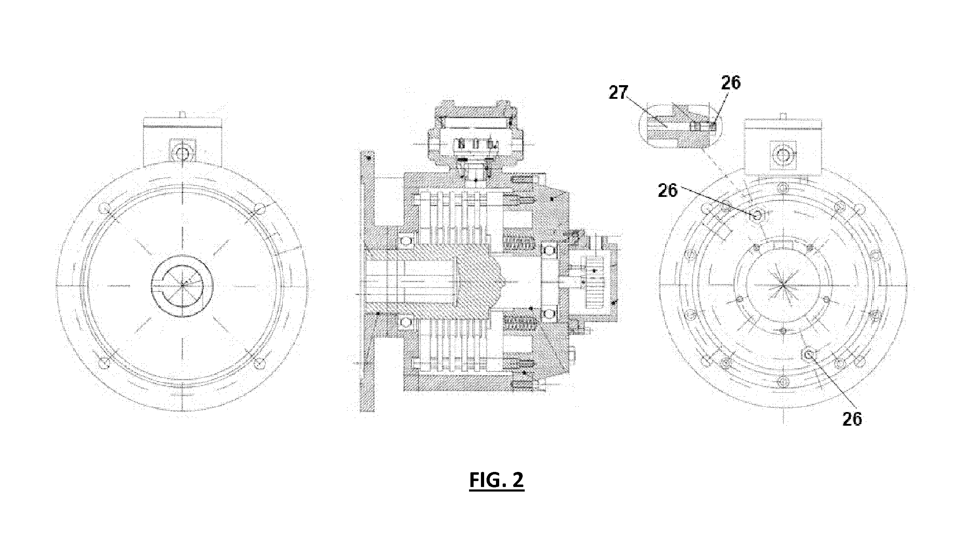

Following a braking intervention, the emergency brake can be released in a reversible and non-destructive manner. With reference to Figure 2 (and the included enlarged detail), one can see that on the outer circumference of the brake, on the magnet side, two external plug screws 26 are accessible which, when removed, allow access to through ducts 27 that cross the magnet 3 and reach the movable keeper 8, in which threaded seats matching the holes are provided. Allen screws can be inserted into the through holes and screwed to the movable keeper 8 to attract the movable keeper towards the magnet 3; the movable keeper will thus release its grip on the disks, which will then rotate gradually and cause the shaft to turn slowly, e.g. so that the load hung to the shaft of the controlled apparatus can come down slowly.

An additional safety element is included, which consists of a micro-switch (not shown in the drawing) located between the movable keeper 8 and the magnet 3, and electrically connected to the electronic circuit in the terminal board 17 by means of electric wires running in the cable passage 22. In normal conditions, the micro-switch gives consent to the operation of the controlled apparatus, i.e. it closes when the movable keeper is normally attracted against the magnet. If for any reason the movable keeper is not attracted when it should, so that the brake will stay on when it should release its grip, the micro-switch will not close, thus not allowing operation of the overhead travelling crane. Otherwise, in fact, the shaft might start turning in braked conditions. This provides continuous monitoring of the proper operation of the brake.

The terminal board 17 and the box 16 of the encoder are of the closed type and are secured to the box 1 by means of screws.

The box 1, the magnet 3 and the fixing element 2 constitute a closed box-like enclosure containing all the brake components, thus improving the adaptability of the device to an apparatus to be controlled, even an already existing one. At the same time this ensures the necessary strength and flameproof resistance of such an enclosure.

The terminal board 17 and the box 16 of the encoder are directly connected to the containment box, and preferably contribute to determining the strength and sealing properties of the enclosure.

The body of the emergency brake is hermetically sealed, with features that meet the flameproof requirements. The holes for the electric cables are provided with suitable hermetic seals; the various elements having at least one side external to the brake are securely fastened together by means of threaded joints or screws.

The brake box 1 is made of cast iron. The floating disks 11 are made of steel, and so is the shaft 5.

The above-described example of embodiment may be subject to variations without departing from the protection scope of the present invention, including all embodiments equivalent for a man skilled in the art.

It is apparent from the above description that each characteristic of the invention operates in synergy with the others to provide the flameproof braking device of the invention.

Accessory features contribute to improving the design of the device.

The elements and features shown in the various preferred embodiments may be combined together without however departing from the protection scope of the present invention. From the above description, those skilled in the art will be able to produce the object of the invention without introducing any further construction details.

## Claims

1. Flameproof electromagnetic emergency brake, adapted to be fixed downstream of a kinematic mechanism of an apparatus to be controlled, comprising:
- a magnet (3) comprising ferromagnetic material and a coil (4) with electric current passing through it to generate the electromagnetic effect;
- a movable keeper (8) adapted to be attracted or pushed back by the magnet;
- a fixed keeper (10);
- a series of floating disks (11) alternated with a series of friction lining disks (12), such floating and friction lining disks being disposed between said movable and fixed keepers and being coaxial to the latter, the absence of electromagnetic effect being such as to cause a braking effect due to the thrust of said movable keeper towards said fixed keeper, the presence of electromagnetic effect being such as to attract said movable keeper towards said magnet;
- a rotating shaft (5) arranged axially in said brake, said shaft being adapted to be axially inserted into said magnet, movable keeper, fixed keeper, floating disks and driction lining disks, and being also adapted to house in an operatively fixed way a shaft of said apparatus downstream of said kinematic mechanism;
- a measuring device (15) for measuring the angular speed of said rotating shaft (5), suitable for providing a signal of intervention of said braking effect, in case the angular speed exceeds a threshold;
- a fixing element (2) for fixing the brake to said kinematic mechanism;
- a containment box (1) adapted to enclose said brake, said containment box ending on one side with said fixing element (2) and on the other side with said magnet (3), and being crossed by said rotating shaft (5).

2. Flameproof electromagnetic emergency brake as in claim 1, wherein said measuring device (15) for measuring the angular speed is an encoder adapted to determine the intervention of said braking effect within a shorter time than that needed by the shaft to make half a turn, determining the interruption of the current in said coil (4).

3. Flameproof electromagnetic emergency brake as in claim 1, comprising:
- a series of studs (13) passing through the inside of the box in a longitudinal way and being fixed at the two sides by inserting its two ends on one side into said magnet and on the other side into said box;
- said floating (8) and fixed (10) keepers and said floating disks (11) having holes which are passed through by said studs, which prevent their rotation and allow their axial translation.

4. Flameproof electromagnetic emergency brake as in claim 3, wherein said friction lining disks (12) have a smaller diameter than the transversal position of the studs, and are so shaped as to have a middle hole, whose shape corresponds to the shape of the shaft, so as to rotate integrally with the rotation of the shaft (5) and to translate axially along said shaft.

5. Flameproof electromagnetic emergency brake as in claim 1, comprising:
- a terminal block (17) containing a terminal board (18) for electric cable terminals and an electronic circuit for controlling the operation of the brake, and equipped with openings for introducing said electric cables;
- a passage (22) for said electric cables through said fixing element to the box, towards said coil (4);
- a container (16) for said measuring device (15), said container having an opening external to the brake for the electrical connection to the terminal board (18);
- all of said openings being shielded.

6. Flameproof electromagnetic emergency brake as in claim 5, wherein said container (16) for the measuring device (15) and said terminal block (17) are directly connected to said containment box, being fixed laterally and to said magnet (3), respectively.

7. Flameproof electromagnetic emergency brake as in claim 1, wherein said magnet is provided with through ducts (27) allowing access to said movable keeper (8) from the outside, in order to move the movable keeper towards the magnet into the braking condition.

8. Flameproof electromagnetic emergency brake as in claim 1, comprising at least one micro-switch, located between said movable keeper (8) and the magnet (3), which closes when the movable keeper is attracted towards the magnet, thereby providing a signal of consent to brake operation.

9. Flameproof electromagnetic emergency brake as in claim 1, comprising springs inserted in said magnet, which are adapted to determine said thrust of said movable keeper towards said fixed keeper.
